(19) Europäisches Patentamt
European Patent Office
Office européen des brevets

(11) **EP 1 010 712 B1**

(12) **EUROPÄISCHE PATENTSCHRIFT**

(45) Veröffentlichungstag und Bekanntmachung des Hinweises auf die Patenterteilung:
**28.10.2009 Patentblatt 2009/44**

(51) Int Cl.:
*C08G 18/08* (2006.01)     *C08G 18/40* (2006.01)
*C08G 18/44* (2006.01)

(21) Anmeldenummer: **99123972.4**

(22) Anmeldetag: **06.12.1999**

(54) **Aliphatische thermoplastische Polyurethane, Verfahren zu ihrer Herstellung und ihre Verwendung**

Aliphatic thermoplastic polyurethanes, a process for their preparation and their use

Polyuréthanes aliphatiques thermoplastiques, leur procédé de préparation et leur utilisation

(84) Benannte Vertragsstaaten:
**AT BE CH CY DE DK ES FI FR GB GR IE IT LI LU MC NL PT SE**

(30) Priorität: **16.12.1998 DE 19857964**
             **30.04.1999 DE 19919788**
             **24.08.1999 DE 19940014**

(43) Veröffentlichungstag der Anmeldung:
**21.06.2000 Patentblatt 2000/25**

(73) Patentinhaber: **Bayer MaterialScience AG
51368 Leverkusen (DE)**

(72) Erfinder:
• **Kaufhol, Wolfgang, Dr.
51061 Köln (DE)**
• **Hoppe, Hans-Georg
42799 Leichlingen (DE)**
• **Heidingsfeld, Herbert
50226 Frechen (DE)**
• **Schulte, Bernhard, Dr.
47803 Krefeld (DE)**
• **Peerlings, Henricus, Dr.
51065 Köln (DE)**

(56) Entgegenhaltungen:
EP-A- 0 414 060     EP-A- 0 712 887
DE-A- 19 630 817    US-A- 3 620 905
US-A- 4 656 228     US-A- 5 541 277

• **PATENT ABSTRACTS OF JAPAN vol. 1998, no. 09, 31. Juli 1998 (1998-07-31) & JP 10 110025 A (DAINIPPON INK &CHEM INC), 28. April 1998 (1998-04-28)**

Bemerkungen:
Die Akte enthält technische Angaben, die nach dem Eingang der Anmeldung eingereicht wurden und die nicht in dieser Patentschrift enthalten sind.

EP 1 010 712 B1

**Beschreibung**

Die Erfindung betrifft aliphatische thermoplastische Polyurethane (TPU) mit verbesserten Eigenschaften, Verfahren zu ihrer Herstellung und ihre Verwendung.

Aromatische thermoplastische Polyurethane (aromatische TPU) sind aufgrund ihres Aufbaus aus aromatischen Diisocyanaten nicht lichtstabil. Bei Farbeinstellungen von Formkörpern entsteht durch Lichteinwirkung eine starke Vergilbung und selbst bei schwarzen Formkörpern kommt es zu einer Farb- und Glanzgradveränderung.

US-A 55 41 277 A beschreibt sinterfähige thermoplastische Polyurethan-Pulver (TPU-Pulver) zur Herstellung von gekörnten, gesinterten Kunststofffolien. Das TPU wird aus linearen, aliphatischen Polyolmischungen (60 - 80 Gew.-Teilen Polycarbonatdiol (MG: 2000) und 20 - 40 Gew.-Teilen Polyesterdiol auf Basis Adipinsäure, Hexandiol und Neopentylglycol (MG: 2000)) und 1,6-Hexamethylendiisocyanat sowie 1,4-Butandiol und Dimethylpolysiloxan mit endständigen Hydroxylgruppen (MG: 2000) hergestellt.

In JP 10-110025 A werden thermoplastische Polyurethane mit großer Härte (Shore A 95 und größer), hoher Aufprallelastizität und niedriger Vergilbungstendenz beschrieben. Das TPU wird aus geradkettigen, aliphatischen Polyolen mit Funktionalitäten von 2 und größer und Molekulargewichten von 500 - 5000, geradkettigen aliphatischen Kettenverlängerern (z.B. 1,4-Butandiol und 1,6-Hexandiol) und geradkettigen aliphatischen Diisocyanaten (z.B. Hexamethylendiisocyanat) erhalten. Als Hilfsmittel werden Antioxidantien, UV-Stabilisatoren, Füllstoffe und Verstärkungsmaterial eingesetzt.

In DE-C 42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten hergestellt wird. Die Polyolkomponente setzt sich zusammen aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000. 1,6-Hexamethylendiisocyanat in einem Äquivalenzverhältnis von 2,8:1,0 bis 4,2:1,0 bezogen auf das Polyolgemisch und 1,4-Butandiol als Kettenverlängerungsmittel, wobei das Äquivalenzverhältnis des 1,4-Butandiols bezogen auf das Polyolgemisch 1,3:1,0 bis 3,3:1,0 beträgt, werden eingesetzt. Diese Formmasse hat den Nachteil, dass sie nach Lagerung (bei Raumtemperatur und besonders bei beschleunigtem Alterungstest, wie Klimawechseltest, Arizonatest und in der Wärme (60 - 95°C) zu einer weißen Belagsbildung neigen. Dies ist besonders für optisch anspruchsvolle Anwendungen von Nachteil.

In US 5 824 738 wird ein lichtstabiles, aliphatisches TPU beschrieben, dass sich auch nach intensiver künstlicher Bewitterung durch eine sehr geringe Vergilbung auszeichnet. Das beschriebene lichtstabile TPU besteht zum einen aus einer kritischen Kombination von UV-Stabilisator, Antioxidationsmittel und Pigment, und zum anderen aus einem Polyetherpolyol auf Propylenoxid-Basis mit Ethylenoxid-Endgruppen, Dicyclohexylmethandiisocyanat (hydriertes MDI = $H_{12}$-MDI) und 1,4-Butandiol. Diese zwar lichtstabilen TPU auf Basis von $H_{12}$-MDI haben den Nachteil, dass sie nur eine relativ geringe Wärmestabilität aufweisen, was besonders nachteilig für Anwendungen, z.B. im Automobilinnenbereich ist, wo hoher Wärmestand gefordert wird.

Aufgabe der vorliegenden Erfindung war es daher, sowohl licht- wie auch wärmestabile thermoplastische Polyurethane sowie ein Verfahren zu ihrer Herstellung zur

Verfügung zu stellen. Für hohe optische Anforderungen, wie z.B. im Automobilinnenbreich, bestand zusätzlich die Aufgabe darin, TPU zur Verfügung zu stellen, die nach Lagerung bei Raumtemperatur und besonders nach beschleunigtem Alterungstest (z.B. nach Lagerung bei 60 bis 95°C) noch Formkörper liefern, die nur geringe oder keine Belagsbildung zeigen.

Diese Aufgabe konnte mit den erfindungsgemäßen thermoplastischen Polyurethanen gelöst werden.

Gegenstand der vorliegenden Erfindung sind aliphatische thermoplastische Polyurethane mit einem Gelbwert von <20, bevorzugt <15 nach 504 Stunden Bewitterung gemäß ISO 4892 und mit einer Erweichungstemperatur (gemessen mittels der dynamisch-mechanischen Analyse (DMS) im Zugmodus, die im folgenden näher beschrieben wird) $T_{erw}$ (bei E' = 3 MPa) >100°C für thermoplastische Polyurethane mit einer Härte von 75 bis 84 Shore A und mit einer Erweichungstemperatur (gemessen mittels der dynamisch-mechanischen Analyse (DMS) im Zugmodus, die im folgenden näher beschrieben wird) $T_{erw}$ (bei E' = 3 Mpa) >130°C für thermoplastische Polyurethane mit einer Härte von 85 bis 98 Shore A sowohl vor als auch nach 504 Stunden Bewitterung nach ISO 4892, wobei

die aliphatischen thermoplastischen Polyurethane aus folgendem Reaktionsprodukt bestehen

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% anderen aliphatischen Diisocyanaten

B) Polyesterpolyol, Polyetherpolyol, Polycarbonatdiol, einem Gemisch aus Polyetherpolyol und Polyesterpolyol, einem Gemisch aus Polyetherpolyol und Polycarbonatdiol oder einem Gemisch aus Polyesterpolyol und Polycarbonatdiol mit jeweils einem mittleren Molekulargewicht zwischen 600 und 5000 g/Mol, bevorzugt 700 und 4 200 g/Mol,

C) 80 bis 100 Gew.-% 1,6-Hexandiol und 10 - 20 Gew.-% Kettenverlängerer mit einem mittleren Molekulargewicht von 60 bis 500 g/Mol

D) als UV-Stabilisatoren ein Gemisch von gehinderten Amin-Stabilisatoren (HALS) und Hydroxyphenylbenzotriazolen in einem Gewichtsverhältnis von 2:1 bis 1:2 und in einer Menge von 0,4 bis 0,9 Gew.-%, bevorzugt 0,4 bis 0,8 Gew.-%, bezogen auf A) + B) + C),

E) gegebenenfalls Katalysatoren und

F) gegebenenfalls weiteren üblichen Hilfsmitteln und Zusatzstoffen,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Ein aus dem thermoplastischen Polyurethan hergestellter Probekörper zeigt auch nach einer Lagerung bei 60 bis 95°C nach 3 Wochen nur geringe Belagsbildung (Auskreiden) auf der Oberfläche.

Die obige Reihenfolge der Komponenten A bis F sagt nichts über die Herstellungsweise der erfindungsgemäßen TPU aus. Die erfindungsgemäßen TPU können in verschiedenen Verfahrensvarianten hergestellt werden, wobei diese Varianten untereinander gleichwertig sind.

Die erfindungsgemäßen TPU auf Basis zweier unterschiedlicher aliphatischer Diisocyanate "A1" (HDI) und "A2" (aliphatisches Diisocyanat) können beispielsweise (siehe auch Beschreibungsseiten 11 bis 15) in einem Reaktionsprozeß zum TPU "A1-2" hergestellt werden. Man kann jedoch auch in bekannter Weise zunächst das TPU "A1" auf Basis des aliphatischen Diisocyanates "A1" und getrennt davon das TPU "A2" auf Basis des aliphatischen Diisocyanates "A2" herstellen, wobei die übrigen Komponenten B bis F identisch sind. Danach werden dann TPU "A1" und TPU "A2" in bekannter Weise im gewünschten Verhältnis zum TPU "A1-2" gemischt (z.B. mit Extrudern oder Knetern).

Die erfindungsgemäßen TPU auf Basis von Polyolgemischen können ebenfalls durch Einsatz von Polyolgemischen (Polyol B1 und Polyol B2) (z.B. Mischaggregate) in einem Reaktionsprozess (siehe auch Seiten 11 bis 15) zum TPU "B1-2" hergestellt werden. Zum anderen kann in bekannter Weise zunächst das TPU "B1" auf Basis von Polyol "B1" und getrennt davon das TPU "B2" auf Basis von Polyol "B2" hergestellt werden, wobei die restlichen Komponenten A und C bis F identisch sind. Danach werden dann TPU "B1" und "B2" in bekannter Weise im gewünschten Verhältnis zum TPU "B1-2" gemischt (z.B. mit Extrudern oder Knetern).

Folgende Polyole können vorzugsweise eingesetzt werden:

Polyesterpolyol mit einem mittleren Molekulargewicht zwischen 700 und 4 200g/Mol,

Polyetherpolyol mit einem mittleren Molekulargewicht zwischen 700 und 4 200 g/Mol,

Polycarbonatdiol mit einem mittleren Molekulargewicht zwischen 700 und 4 200 g/Mol,

Polyetherpolyol/Polyesterpolyol-Gemisch mit einem mittleren Molekulargewicht zwischen 700 und 4 200 g/Mol,

Polyetherpolyol/Polycarbonatdiol-Gemisch mit einem mittleren Molekulargewicht zwischen 700 und 4 200 g/Mol,

Polyesterpolyol/Polycarbonatdiol-Gemisch mit einem mittleren Molekulargewicht zwischen 700 und 4 200 g/Mol.

Bevorzugt wird als Polyolkomponente ein Gemisch aus 20 bis 80 Gew.-Teilen eines aliphatischen Polycarbonatdiols mit einem mittleren Molekulargewicht von 1000 bis 2200 g/Mol und
80 bis 20 Gew.-Teilen eines Polybutandioladipats oder eines Polycaprolactondiols mit einem mittleren Molekulargewicht von 1000 bis 2400 g/Mol eingesetzt.

Besonders bevorzugt besteht die Polyolkomponente aus einem Gemisch aus 30 bis 70 Gew.-Teilen eines aliphatischen Polycarbonatdiols mit einem mitleren Molekulargewicht von 1000 bis 2200 g/Mol und
70 bis 30 Gew.-Teilen eines Polybutandioladipats oder eines Polycaprolactondiols mit einem mittleren Molekulargewicht von 1000 bis 2400 g/Mol.

Wird der Anteil des Polybutandioladipates im Polyolgemisch über 50 % erhöht und werden besondere Anforderungen an die Hydrolyse gestellt, müssen dem Polybutandioladipat bekannte Hydrolyseschutzmittel (wie z.B. Carbodiimide) zugesetzt werden.

Als UV-Stabilisatoren wird ein Gemisch von gehinderten Amin-Stabilisatoren (HALS) und Hydroxyphenylbenzotriazolen in einem Gewichtsverhältnis von 2:1 bis 1:2 eingesetzt.

Je nach Anforderung an das Formteil, welches aus dem erfindungsgemäßen TPU hergestellt wird, kann das Hexamethylendiisocyanat (HDI) partiell gegen ein oder mehrere andere aliphatische Diisocyanate, insbesondere Isophorondiisocyanat (IPDI), 1,4-Cyclohexandiisocyanat, 1-Methyl-2,4-cyclohexandiisocyanat, 1-Methyl-2,6-cyclohexandiisocyanat und Isomerengemisch davon, 4,4'-, 2,4'- und 2,2'-Dicyclohexylmethandiisocyanat und Isomerengemisch davon ersetzt werden.

Besonders bevorzugt sind erfindungsgemäße thermoplastische Polyurethane, die erhältlich sind aus

A) 95 bis 70 Mol-% Hexamethylendiisocyanat und 5 bis 30 Mol-% andere aliphatische Diisocyanate,

B) Polyesterpolyol, Polyetherpolyol, Polycarbonatdiol, einem Gemisch aus Polyetherpolyol und Polyesterpolyol, einem Gemisch aus Polyetherpolyol und Polycarbonatdiol oder einem Gemisch aus Polyesterpolyol und Polycarbonatdiol mit jeweils einem mittleren Molekulargewicht zwischen 600 und 5000 g/Mol, bevorzugt 700 und 4 200 g/Mol,

C) 80 bis 100 Gew.-% 1,6-Hexandiol und 0 bis 20 Gew.-% Kettenverlängerer mit einem mittleren Molekulargewicht von 60 bis 500 g/Mol

D) als UV-Stabilisatoren ein Gemisch von gehinderten Amin-Stabilisatoren (HALS) und Hydroxyphenylbenzotriazolen in einem Gewichtsverhältnis von 2:1 bis 1:2 und in einer Menge von 0,4 bis 0,9 Gew.-%, bevorzugt 0,4 bis 0,8 Gew.-%, bezogen auf A) + B) + C),

E) gegebenenfalls Katalysatoren und

F) gegebenenfalls üblichen Hilfsmitteln und Zusatzstoffen,

wobei das Äquivalentverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt und wobei ein aus dem thermoplastischen Polyurethan hergestellter Probekörper auch nach einer Lagerung bei 60 bis 95°C nach 3 Wochen nur geringe Belagsbildung (Auskreiden) auf der Oberfläche zeigt.

Ein aus dem thermoplastischen Polyurethan hergestellter Probekörper zeigt auch nach einer Lagerung bei 60 bis 95°C nach 3 Wochen nur geringe Belagsbildung (Auskreiden) auf der Oberfläche.

Als Komponente B) werden lineare hydroxylterminierte Polyole mit einem mittleren Molekulargewicht von 600 bis 5000 g/Mol, bevorzugt von 700 bis 4 200 g/Mol einge setzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiolpolyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 5000, bevorzugt von 700 bis 4 200 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 5 000, bevorzugt von 700 bis 4 200. Sie können sowohl einzeln als auch in Form von Mischungen untereinander zur Anwendung kommen.

Besonders bevorzugt sind hydroxylgruppenhaltige Polymerisationsprodukte des Tetrahydrofurans und Polyetherdiole auf Basis Ethylenoxid und/oder Propylenoxid. Auch nur der teilweise Einsatz dieser bevorzugten Polyetherdiole in Polyolgemischen, insbesondere mit 1,6 Hexandiol als Kettenverlängerungsmittel, führt zu TPUs, die nach beschleunigten Alterungstests (z.B. nach Lagerung bei 60 bis 95°C) nur sehr geringe Belagsbildung auf der Oberfläche zeigen.

Als Kettenverlängerungsmittel werden aliphatische Diole und/oder Diamine mit einem Molekulargewicht von 60 bis 500 eingesetzt, vorzugsweise aliphatische Diole mit 2 bis 14 Kohlenstoffatomen, wie z.B. Ethandiol, Diethylenglykol, Dipropylenglykol und insbesondere 1,4-Butandiol, oder (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethylethylendiamin. Es können auch Gemische der oben genannten Kettenverlängerer eingesetzt werden. Daneben können auch kleinere Mengen an Triolen zugesetzt werden, jedoch höchstens in solcher Menge, dass ein thermoplastisch verarbeitbares Produkt entsteht.

1,6-Hexandiol kann gegebenenfalls in Abmischung mit bis zu 20 Gew.-% Kettenverlängerer mit einem mittleren Molekulargewicht von 60 bis 500 g/Mol eingesetzt werden. Mit 1,6-Hexandiol hergestellte TPU bzw. daraus erhaltene Probekörper zeigen nach beschleunigten Alterungstests (z.B. nach Lagerung bei 60 bis 95°C) nur geringe Belagsbildung auf der Oberfläche.

Bei Anwendungen mit geringeren Anforderungen an die Lichtstabilität, z.B bei dunkel eingefärbten Formmassen, können Teile der aliphatischen Diole (0 bis 80 Gew.-%) und Diamine (0 bis 20 Gew.-%) durch aromatische Diole und Diamine ersetzt werden. Beispiele für geeignete aromatische Diole sind Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Ein weiterer Gegenstand der Erfindung ist ein Verfahren zur kontinuierlichen Herstellung der erfindungsgemäßen thermoplastischen Polyurethane, welches dadurch gekennzeichnet ist, dass das Polyol / das Polyolgemisch B) und der Kettenverlängerer C) kontinuierlich gemischt werden und danach mit dem Diisocyanat/Diisocyanatgemisch A) intensiv vermischt werden (One-Shot-Verfahren) und anschließend die Reaktion in einem Austragsgefäß (z.B. in einem Extruder) zu Ende geführt wird und das so erhaltene Produkt gegebenenfalls granuliert wird.

Bevorzugt wird die Reaktion in Gegenwart eines Katalysators durchgeführt.

Das Gemisch aus Polyol (B) und Kettenverlängerer (C) wird mit dem Diisocyanat (A) bevorzugt in einem Reaktor innerhalb einer Zeitspanne von maximal 5 Sekunden homogen vermischt. Bevorzugt sollte die Durchmischung unter geringer Rückvermischung erfolgen. Eine geringe Rückvermischung im Sinne dieser Erfindung bedeutet, dass das Verweilzeitverhalten in dem Reaktor dem einer Serie von ≥ 10 idealen Rührkesseln (Rührkesselkaskade) entspricht. Eine homogene Durchmischung im Sinne der Erfindung bedeutet, dass die Konzentrationsverteilung der Komponenten (A) und (B) + (C) und des Reaktionsprodukts in der Mischung eine relative Standardabweichung von weniger als 5 % aufweist.

Bevor die Komponenten (A) und (B)+(C) kontinuierlich in den Reaktor eingeleitet werden, müssen sie getrennt voneinander, vorzugsweise in einem Wärmetauscher, auf eine Temperatur zwischen 60 und 150°C, vorzugsweise zwischen 80 und 120°C erwärmt werden. Erfindungsgemäß wesentlich ist, dass sich die Temperaturen der Komponenten (A) und (B)+(C) vor der Zusammenführung im Reaktor um weniger als 20°C unterscheiden. Vorzugsweise sollte die Temperaturdifferenz zwischen den Komponentenströmen (A) und (B)+(C) < 10°C, besonders bevorzugt < 5°C sein.

Die so erhaltene Mischung wird dann in einem beliebigen Reaktor, vorzugsweise einem Extruder oder einem Reaktionsrohr, zum TPU umgesetzt.

Erfindungsgemäß wird die Polyaddition vorzugsweise in einem isolierten und vorzugsweise beheizbaren Statikmischer durchgeführt. Dieser hat den Vorteil, dass er keine beweglichen Teile aufweist und dass eine homogene, nahezu rückvermischungsfreie Durchmischung in kürzester Zeit erfolgt. Erfindungsgemäß einsetzbare Statikmischer sind in Chem.-Ing. Techn. 52, Nr.4 auf den Seiten 285-291 sowie in "Mischen von Kunststoff und Kautschukprodukten", VDI-Verlag, Düsseldorf 1993 beschrieben.

Bevorzugt werden Statikmischer gemäß DE-C 23 28 795 eingesetzt. Die Statikmischer weisen bevorzugt ein Länge/Durchmesserverhältnis von 8:1 bis 16:1, besonders bevorzugt von 10:1 bis 14:1 auf Es ergibt sich eine Verweilzeit in dem Statikmischer von < 5 Sekunden, bevorzugt < 2,5 Sekunden. Die Statikmischer werden vorzugsweise aus Edelstahl, besonders bevorzugt aus V4A gefertigt.

Ein weiterer Gegenstand der Erfindung ist ein Verfahren zur kontinuierlichen Herstellung der erfindungsgemäßen thermoplastischen Polyurethane, welches dadurch gekennzeichnet ist, dass das Polyol/Polyolgemisch B) und der Kettenverlängerer C) kontinuierlich gemischt werden, danach mit dem Hexamethylendiisocyanat zur vollständigen Reaktion gebracht wird, danach mit dem anderen (zweiten) aliphatischen Diisocyanat abgemischt und zur Reaktion gebracht wird, die Reaktion in einem Austragsgefäß zu Ende geführt wird und das Produkt gegebenenfalls granuliert wird. Diese Verfahrensvariante ist besonders bevorzugt.

Das Verfahren kann auch so durchgeführt werden, dass das Gemisch mit dem anderen (zweiten) aliphatischen Diisocyanat zur Reaktion gebracht wird, danach mit Hexamethylendiisocyanat abgemischt und zur Reaktion gebracht wird, die Reaktion in einem Austragsgefäß zu Ende gebracht wird und das Produkt gegebenenfalls abschließend granuliert wird.

Die erfindungsgemäßen thermoplastischen Polyurethane können auch nach dem Prepolymerverfahren hergestellt werden, wobei zunächst das Diisocyanat/Diisocyanatgemisch mit dem Polyol/Polyolgemisch gemischt und unter Erhalt eines Prepolymeren zur Reaktion gebracht wird und dieses Prepolymer in einem zweiten Schritt mit dem Kettenverlängerer C) vermischt und zur Reaktion gebracht wird.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N′-Dimethylpiperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten, UV-Stabilisatoren und gegebenenfalls Katalysatoren können auch Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Gleitmittel werden vorzugsweise in Mengen von 0,1 bis 1,0 Gew.-% bezogen auf A) + B) + C) zugesetzt. Die Antioxidationsmittel finden vorzugsweise in Mengen von 0,1 bis 0,7 Gew.-% bezogen auf A) und B) und C) Anwendung.

Das erfindungsgemäße TPU wird bevorzugt kontinuierlich hergestellt, wobei das Polyol/Polyolgemisch und der Kettenverlängerer kontinuierlich gemischt werden (z.B. durch Statikmischer) und dieses Gemisch mit HDI gemischt (z.B. durch Statikmischer) und zur Reaktion gebracht wird. In einem weiteren Schritt wird das zweite von HDI verschiedene Diisocyanat (falls vorhanden) eingemischt. Die Einmischung des zweiten Diisocyanates kann z.B. durch Statikmischer, Rohrmischer oder auch im Extruder erfolgen. Die Mischung kann z.B. in einem Extruder vollständig ausreagieren und anschließend granuliert werden.

Das Polyol-Kettenverlängerer-Gemisch und das Diisocyanat sollten vorzugsweise vor der Mischung einen Temperaturunterschied von < 20°C, bevorzugt < 10°C, besonders bevorzugt < 5°C aufweisen. Die absoluten Rohstoff-Temperaturen liegen vorzugsweise zwischen 60°C und 150°C, besonders bevorzugt zwischen 80°C und 120°C.

Das zweite von HDI verschiedene Diisocyanat kann zuerst mit dem Polyol-Kettenverlängerer-Gemisch zur Reaktion gebracht werden. Danach wird HDI eingemischt und ebenfalls zur Reaktion gebracht.

Die Zugabe von Additiven kann nach der Polymerisation durch Compoundierung oder auch während der Polymerisation erfolgen. Während der Polymerisation können beispielsweise Antioxidationsmittel und UV-Stabilisatoren im Polyol gelöst werden. Es können aber auch Gleitmittel und Stabilisatoren beim Extruderverfahren beispielsweise im zweiten Teil der Schnecke zugegeben werden.

Die bei beschleunigten Alterungstests (z.B. nach Lagerung bei 60 bis 95°C) auftretende weißliche Belagsbildung auf der Oberfläche von Formkörpern aus TPU kann insbesondere dadurch vermieden werden, dass bei dem erfindungsgemäßen TPU das eingesetzte Hexamethylendiisocyanat teilweise durch andere aliphatische Diisocyanate ersetzt wird. Diese Belagsbildung kann auch dadurch vermieden werden, dass als Kettenverlängerer überwiegend 1,6-Hexandiol eingesetzt wird.

Die erfindungsgemäßen TPU können zur Herstellung von Formkörpern, insbesondere zur Herstellung von Extrudaten (z.B. Folien) und Spritzgießteilen eingesetzt werden. Durch ihre Eigenschaften sind sie besonders im Automobilinnenbereich bevorzugt. Des weiteren können die erfindungsgemäßen TPU als sinterfähiges Pulver zur Herstellung von Flächengebilden und Hohlkörpern verwendet werden.

Die Erfindung soll anhand der nachfolgenden Beispiele näher erläutert werden.

**Beispiele**

Herstellung TPU und Spritzplatten

Die TPU wurden folgendermaßen kontinuierlich hergestellt:

Das Gemisch aus Polyol B), Kettenverlängerer C) und Dibutylzinndilaurat wurde in einem Kessel unter Rühren auf ca. 110°C erhitzt und zusammen mit dem entsprechenden Diisocyanat, welches mittels Wärmeaustauscher auf ca. 110°C erhitzt wurde, durch einen Statikmischer der Firma Sulzer (DN6 mit 10 Mischelementen und einer Scherrate von 500 s$^{-1}$) intensiv gemischt und dann in den Einzug einer Schnecke (ZSK 32) geführt.

Soweit erforderlich, wurde das zweite von HDI verschiedene Diisocyanat in die 1. Zone der Schnecke (ZSK 32) eingespeist. Das gesamte Gemisch reagierte auf dem Extruder bis zur vollständigen Umsetzung aus und wurde anschließend granuliert.

Das jeweilige Granulat wurde getrocknet und dann jeweils zu mehreren Spritzplatten verspritzt. Ein Teil der Spritzplatten wurde jeweils in einem Umlufttrockenschrank bei 85°C gelagert und auf Belagsbildung an der Oberfläche getestet. Die Belagsbildung ist besonders gut an Fingerabdrücken, die sich auf dem Formkörper befinden, zu erkennen. Die Beurteilung der Proben erfolgte qualitativ, da eine Meßmethode nicht bekannt ist. Der andere Teil der Spritzplatten wurde jeweils der nachfolgend beschriebenen Bewitterung unterworfen. Anschließend wurde der Gelbwert und der Elastizitätsmodul über Temperatur gemessen.

| | |
|---|---|
| DBTL: | Dibutylzinndilaurat |
| DE2020: | Polycarbonatdiol auf 1,6-Hexandiol-Basis mit mittlerem Molekulargewicht $\overline{M}_n$ = 2000 g/mol |
| PE 225B: | Polybutandioladipat mit mittlerem Molekulargewicht $\overline{M}_n$ = 2250 g/mol |
| 1,4BDO: | 1,4-Butandiol |
| PE 100B: | Polybutandioladipat mit $\overline{M}_n$ = 1000 g/mol |
| Terathane 2000®: | Polytetrahydrofurandiol mit $\overline{M}_n$ = 2000 g/mol (Firma Du Pont) |
| Terathane 1000®: | Polytetrahydrofurandiol mit $\overline{M}_n$ = 1000 g/mol (Firma Du Pont) |
| HDI: | Hexamethylendiisocyanat |
| IPDI: | Isophorondiisocyanat |
| H$_{12}$-MDI: | Isomerengemisch von Dicyclohexylmethandiisocyanat |
| Abril® 10 DS: | Bisstearylamid (Fa. Würtz GmbH) |
| Irganox® 1010: | Tetrakis[methylen-(3,5-di-tert-butyl-4-hydroxyhydrocinna- mate)]methan (Fa. Ciba Geigy) |
| Tinuvin® 328: | 2-(2'-Hydroxy-3'-5'-di-tert-amylphenyl)benzotriazol (Fa. Ciba Geigy) |
| Tinuvin® 622: | Dimethylsuccinatpolymer mit 4-Hxdroxy-2,2,6,6-tetramethyl- 1-piperidin ethanol (Fa. Ciba Geigy) |
| Loxiol® G78: | Stearinsäure (Fa. Hoechst) |
| Acrawax®C: | Bisstearylamid (Firma Lonza) |
| 1,6 HDO: | 1,6-Hexandiol |
| Tinuvin® 213: | Poly(oxy-1,2-ethandiyl),(α,(3-(3-(2H-benzotriazol-2-yl)-5-   (1,1-dimethylethyl)-4-hydroxyphenyl)-1-oxopropoxyl)-ω-(3-   (3-(2H-benzotriazol-2-yl)-5-(1,1-dimethylethyl)-4-hydroxy-   phenyl)-1-oxopropoxy; major component (Fa. Ciba Geigy) |
| Tinuvin® 765: | Bis(1,2,2,6,6-Pentamethyl-4-piperidinyl)sebacat; Hauptbe- standteil (Fa. Ciba Geigy) |
| Irganox® 245: | Ethylenbis(oxyethylen)bis(3-tert.-butyl-4-hydroxy-5(methyl- hydrocinnamat) (Fa. Ciba Geigy) |

Zusammensetzung der TPU (thermoplastische Polyurethane):

| TPU | HDI Mole/g* | IPDI Mole/g* | HDI/IPDI mol%/mol% | DE2020 Mole/g* | PE225B Mole/g* | 1,4BDO Mole/g* | 1,6 HDO Mole/g* | DBTL ppm |
|---|---|---|---|---|---|---|---|---|
| 1** | 5,09/855 | - | 100/- | 1,0/2000 | 0,43/967 | 3,76/339 | - | 40 |
| 2** | 4,83/813 | 0,25/56 | 95/5 | 1,0/2000 | 0,43/967 | 3,76/339 | - | 60 |
| 3** | 4,58/770 | 0,51/113 | 90/10 | 1,0/2000 | 0,43/967 | 3,76/339 | - | 100 |

(fortgesetzt)

| TPU | HDI Mole/g* | IPDI Mole/g* | HDI/IPDI mol%/mol% | DE2020 Mole/g* | PE225B Mole/g* | 1,4BDO Mole/g* | 1,6 HDO Mole/g* | DBTL ppm |
|---|---|---|---|---|---|---|---|---|
| 4** | 4,07/685 | 1,02/226 | 80/20 | 1,0/2000 | 0,43/967 | 3,76/339 | - | 120 |
| 10 | 5,09/856 | - | - | 1,0/2000 | 0,43/967 | - | 3,76/445 | 40 |
| 11 | 6,05/1018 | - | - | 1,0/2000 | 0,43/967 | - | 4,75/561 | 40 |
| 12 | 7,3/1237 | - | - | 1,0/2000 | 0,43/967 | - | 6,07/719 | 40 |
| 13 | 5,44/916 | 0,61/136 | 90/10 | 1,0/2000 | 0,43/967 | - | 4,75/561 | 100 |
| 14 | 5,14/865 | 0,91/202 | 85/15 | 1,0/2000 | 0,43/967 | - | 4,75/561 | 120 |
| 15 | 5,09/856 | - | - | 1,0/2000 | 0,43/967 | 0,75/68 | 3,01/356 | 40 |
| 16 | 5,09/856 | - | - | 1,0/2000 | 0,43/967 | - | 3,01/356 | 40 |
| * Die Menge der Reaktanden sind in Mole und Gramm (Mole/g) angegeben. ** Vergleich | | | | | | | | |

Die TPU 1 bis 4 und 10 bis 16 enthalten 0,3 Gew.-% Abril[®]10DS, 0,3 Gew.-% Irganox[®]1010, 0,4 Gew.-% Tinuvin[®]328 und 0,4 Gew.-% Tinuvin[®]622, jeweils bezogen auf TPU. Der Gehalt an DBTL bezieht sich auf Polyol-Mischung.

Das TPU 16 enthält 0,75 mol (78 g) Neopentylglykol (2,2-Dimethyl-1,3-propandiol).

TPU 15: HDO:BDO = 80:20 (Verhältnis der Molprozente)

TPU 16: HDO:Neopentylglykol = 80:20 (Verhältnis der Molprozente)

**Zusammensetzung der TPU**

| TPU | Diisocyanat Mole/g* | | Polyol 1 Mole/g* | | Polyol 2 Mole/g* | | 1,4BDO Mole/g* | DBTL ppm |
|---|---|---|---|---|---|---|---|---|
| 5** | 2,8 / 473 | HDI | 0,5 / 1000 | Terathane 2000 | 0,5/ 500 | Terathane 1000 | 1,84 / 166 | 60 |
| 6** | 3,38 / 568 | HDI | 1,0 / 2250 | PE225B | - | - | 2,41 / 217 | 60 |
| 7** | 5,09 / 855 | HDI | 1,0/2000 | DE2020 | 0,43 / 967 | PE 225B | 3,76 / 339 | 60 |
| Vergleich 1 | 3,76/987 | H$_{12}$-MDI | 1,0/1000 | PE100B | - | - | 2,76/249 | 300 |
| Vergleich 2 | 4,16/1092 | H$_{12}$-MDI | 1,0/1000 | Terathane 1000 | - | - | 3,16 / 285 | 300 |
| 8** | 3,37/ 567 | HDI | 1,0/2000 | DE 2020 | 0,43 / 967 | PE 225 B | 1,94 / 175 | 60 |
| 9** | 3,04/ 512 | HDI | 1,0/2000 | DE 2020 | 0,43 / 967 | PE 225 B | 1,61 / 145 | 60 |

(fortgesetzt)

| TPU | Diisocyanat | | Polyol 1 | | Polyol 2 | | 1,4BDO | DBTL ppm |
| | Mole/g* | | Mole/g* | | Mole/g* | | Mole/g* | |
|---|---|---|---|---|---|---|---|---|
| 17 | 2,8/473 | HDI | 0,5/1000 | Terathane 2000 | 0,5/1000 | Terathane 1000 | - | 60 |

| TPU 17 enthält als Kettenverlängerer 1,6 HDO (1,84 Mole; 217 g). |
|---|
| *Die Menge der Reaktanden sind in Mole und Gramm (Mole/g) angegeben. |
| ** Vergleich |

Die TPU 5 bis 9 und 17 sowie Vergleich 1 und 2 enthalten außerdem folgende Additive:

| TPU | Gew.-% bez. auf TPU (A) + B) + C) |
|---|---|
| 5** | 0,3 % Abril10 DS, 0,3 % Irganox 1010, 0,4 % Tinuvin 328, 0,4 % Tinuvin 622 |
| 6** | analog TPU 5 |
| 7** | 0,55 % Loxiol G78, 0,17 % Irganox 245, 0,35 % Tinuvin 328, 0,35 % Tinuvin 622 |
| Vergleich 1 | 0,3 % Acrawax C, 0,4 % Irganox 1010, 0,4 % Tinuvin 213, 0,4 % Tinuvin 765 |
| Vergleich 2 | 0,5 % Acrawax C, 0,5 % Irganox 1010, 0,4 % Tinuvin 213, 0,4 % Tinuvin 622 |
| 8** | analog TPU 7 |
| 9** | analog TPU 7 |
| 17 | analog TPU 5 |

## Ergebnisse:

| Belagsbildung bei einer Lagerung bei 85°C nach | | | | |
|---|---|---|---|---|
| TPU | 0 Tagen | 7 Tagen | 14 Tagen | 21 Tagen |
| 1** | keine | zuviel | zuviel | zuviel |
| 2** | keine | sehr gering | gering | gering |
| 3** | keine | sehr gering | sehr gering | gering |
| 4** | keine | sehr gering | sehr gering | gering |
| 10 | keine | sehr gering | sehr gering | sehr gering |
| 11 | keine | sehr gering | sehr gering | sehr gering |
| 12 | keine | sehr gering | sehr gering | sehr gering |
| 13 | keine | sehr gering | sehr gering | sehr gering |
| 14 | keine | sehr gering | sehr gering | sehr gering |
| 15 | keine | sehr gering | sehr gering | sehr gering |
| 16 | keine | sehr gering | sehr gering | sehr gering |
| 17 | keine | sehr gering | sehr gering | sehr gering |

## Ergebnisse:

| TPU | vor Bewitterung | | | nach Bewitterung | | |
|---|---|---|---|---|---|---|
| | $T_{erw}$ (bei E' = 3 Mpa) in °C | Härte Shore A | Gelbwert | $T_{erw}$ (bei E' = 3 Mpa) in °C | Gelbwert | Härte Shore A |
| 1** | 153 | 91 | 12 | 153 | 12 | 91 |
| 2** | 148 | 89 | 11 | 148 | 13 | 89 |
| 3** | 141 | 87 | 11 | 141 | 12 | 87 |
| 4** | 134 | 86 | 12 | 134 | 13 | 86 |
| 5** | 143 | 88 | 12 | 144 | 13 | 88 |
| 6** | 146 | 89 | 12 | 145 | 12 | 89 |
| 7** | 149 | 90 | 11 | 148 | 12 | 90 |
| 8** | 121 | 84 | 11 | 120 | 12 | 84 |
| 9** | 117 | 81 | 12 | 118 | 12 | 81 |
| 10 | 144 | 91 | 11 | 143 | 12 | 91 |
| 11 | 149 | 93 | 12 | 150 | 13 | 93 |
| 12 | 155 | 94 | 11 | 154 | 12 | 94 |
| Vergleich 1 | 120 | 92 | 10 | 119 | 10 | 92 |
| Vergleich 2 | 120 | 94 | 10 | 121 | 10 | 94 |
| 13 | 141 | 89 | 10 | 140 | 11 | 89 |
| 14 | 135 | 88 | 11 | 136 | 10 | 88 |
| 15 | 132 | 88 | 12 | 133 | 11 | 88 |
| 16 | 134 | 89 | 11 | 133 | 12 | 89 |
| 17 | 138 | 86 | 13 | 137 | 13 | 86 |

**Testbedingungen**

Aus den TPU wurden rechteckige Spritzplatten (125 mm x 50 mm x 1 mm) hergestellt.

Dynamisch-mechanische Analyse (DMS)

Aus den Spritzplatten wurden Rechtecke (30 mm x 10 mm x 1 mm ) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast dient dazu, im Zeitpunkt negativer Deformationsamplitude die Probe noch ausreichend gespannt zu halten.

Die Erweichungstemperatur $T_{erw}$ wurde als charakteristische Temperatur für den Wärmestand bei E'= 3 MPa bestimmt.

Die DMS-Messungen wurden mit dem Seiko DMS Modell 210 der Firma Seiko mit 1 HZ im Temperaturbereich von -150°C bis 200°C mit einer Heizrate von 2°C/min durchgeführt.

Bewitterung der Proben

Die Bewitterung der Prüfkörper wurde in einem Bewitterungsgerät CI 4000 WOM über 504 Stunden durchgeführt. Der Prüfzyklus war 102 min Licht und 18 min Licht und Regen bei einer Schwarzstandardtemperatur von 65°C. Die Bestrahlungsstärke betrug 0,35 W/m$^2$ bei 340 nm und 50 % rel. Luftfeuchtigkeit. Diese Bedingungen entsprachen im wesentlichen der ISO 4892. An den bewitterten Prüfkörpern wurden sowohl E'-Modulmessungen (DMS) als Gelbwert-Bestimmung durchgeführt.

Bestimmung des Gelbwertes

Die Bestimmung des Gelbwertes wurde mit der Minolta Chroma Meter CR-100 an den Prüfkörpern durchgeführt. Die Bestimmung des Gelbwertes folgt im wesentlichen der DIN 6167.

Das Gerät wird grundsätzlich vor jeder Meßreihe kalibriert. Nach Auslösen des Meßblitzes muß das Display die rückseitig auf der weißen Eichplatte notierten Werte anzeigen.

Der Referenzgelbwert der Eichplatte beträgt 3,75.

Der Gelbwert (Y) errechnet sich folgendermaßen:

$$Y = \frac{(2,45 * x - 1,149)}{y} + 1,149 * 100$$

Der Gelbwert (Y) kann mit obiger Formel ausgerechnet werden.

Zum Messen des Gelbwerts wird der Prüfkörper so auf die weiße Keramikreferenzplatte gelegt, dass die mittleren Bereiche übereinanderliegen. Anschließend wird der Meßblitz ausgelöst.

Die x- und y-Werte werden gemessen und nach obiger Formel der Gelbwert (Y) ausgerechnet.

## Patentansprüche

1. Thermoplastische Polyurethane mit einem Gelbwert von <20, bevorzugt <15 nach 504 Stunden Bewitterung gemäß ISO 4892 und mit einer Erweichungstemperatur (gemessen mittels der dynamisch-mechanischen Analyse (DMS) im Zugmodus) $T_{erw}$ (bei E' = 3 MPa) >100°C für thermoplastische Polyurethane mit einer Härte von 75 bis 84 Shore A und mit einer Erweichungstemperatur (gemessen mittels der dynamisch-mechanischen Analyse (DMS) im Zugmodus) $T_{erw}$ (bei E' = 3 Mpa) >130°C für thermoplastische Polyurethane mit einer Härte von 85 bis 98 Shore A vor und nach 504 Stunden Bewitterung nach ISO 4892, wobei die thermoplastischen Polyurethane aus folgendem Reaktionsprodukt bestehen

   A) 100 bis 60 Mol-% Hexamethylendiisocyanat (HDI) und 0 bis 40 Mol-% anderen aliphatischen Diisocyanaten,
   B) Polyolen aus der Gruppe bestehend aus Polyesterpolyolen, Polyetherpolyolen, Polyetherpolyol/Polyesterpolyol-Gemischen, Polyetherpolyol/Polycarbonatdiol-Gemischen, Polyesterpolyol/PolycarbonatDiol-Gemischen und Polycarbonatdiolen mit jeweils mittleren Molekulargewichten zwischen 600 und 5000 g/Mol,
   C) 80 bis 100 Gew.-% 1,6-Hexandiol und 0 bis 20 Gew.-% Kettenverlängerer mit einem mittleren Molekulargewicht von 60 bis 500 g/Mol
   D) als UV-Stabilisatoren ein Gemisch von gehinderten Amin-Stabilisatoren (HALS) und Hydroxyphenylbenzotriazolen in einem Gewichtsverhältnis von 2:1 bis 1:2 und in einer Menge von 0,4 bis 0,9 Gew.-% bezogen auf A) und B) und C),
   E) gegebenenfalls Katalysatoren und
   F) gegebenenfalls üblichen Hilfsmitteln und Zusatzstoffen,

   wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

2. Thermoplastische Polyurethane gemäß Anspruch 1, wobei als Komponente A) 95 bis 60 Mol-% Hexamethylendiisocyanat (HDI), bevorzugt 90 bis 60 Mol-%, und 5 bis 40 Mol-% andere aliphatische Diisocyanate, bevorzugt 10 bis 40 Mol-%,
   und als Komponente B)
   Polyesterpolyol/Polycarbonat-Diol-Gemische mit einem mittleren Molekulargewicht zwischen 600 und 5000 g/Mol eingesetzt werden.

3. Thermoplastische Polyurethane gemäß Anspruch 1, wobei als Komponente A)
   95 bis 60 Mol-% Hexamethylendiisocyanat (HDI), bevorzugt 90 bis 60 Mol-%, und 5 bis 40 Mol-% andere aliphatische Diisocyanate, bevorzugt 10 bis 40 Mol-%,

und als Komponente B)
Polycarbonatdiole mit einem mittleren Molekulargewicht zwischen 600 und 5000 g/Mol eingesetzt werden.

4. Thermoplastische Polyurethane gemäß Anspruch 1, wobei als Komponente A)
95 bis 70 Mol-% Hexamethylendiisocyanat und 5 bis 30 Mol-% andere aliphatische Diisocyanate,
und als Komponente B)
Polyesterpolyol, Polyetherpolyol, ein Gemisch aus Polyetherpolyol und Polyesterpolyol, ein Gemisch aus Polyetherpolyol und Polycarbonatdiol oder ein Gemisch aus Polyesterpolyol und Polycarbonatdiol mit jeweils einem mittleren Molekulargewicht zwischen 600 und 5000 g/Mol eingesetzt werden.

5. Verfahren zur kontinuierlichen Herstellung von thermoplastischen Polyurethanen gemäß einem oder mehreren der Ansprüche 1 bis 4, **dadurch gekennzeichnet, dass** das Polyol / das Polyolgemisch und der Kettenverlängerer kontinuierlich gemischt werden und danach mit dem Diisocyanat/Diisocyanatgemisch intensiv vermischt werden (One-Shot-Verfahren) und anschließend die Reaktion in einem Austragsgefäß (z.B. in einem Extruder) zu Ende geführt wird und das so erhaltene Produkt gegebenenfalls granuliert wird.

6. Verfahren gemäß Anspruch 5, **dadurch gekennzeichnet, dass** die Reaktion in Gegenwart eines Katalysators durchgeführt wird.

7. Verfahren gemäß Anspruch 5 oder 6, **dadurch gekennzeichnet, dass** sich die Temperatur des Polyol/(Polyolgemisches)/Kettenverlängerer-Gemisches und des Diisocyanates(Diisocyanatgemisches) um nicht mehr als 20°C, bevorzugt 10°C unterscheiden.

8. Verfahren gemäß Anspruch 5 oder 6, **dadurch gekennzeichnet, dass** das Polyol/Polyolgemisch und der Kettenverlängerer kontinuierlich gemischt werden und danach mit dem Diisocyanat/Diisocyanatgemisch intensiv in einem Reaktor innerhalb von maximal 5 Sekunden homogen vermischt werden, wobei die Temperaturen der beiden Gemische vor der Zusammenführung im Reaktor eine Differenz von <20°C aufweisen.

9. Verfahren gemäß Anspruch 8, **dadurch gekennzeichnet, dass** die Temperatur der beiden Gemische vor dem Eintritt in den Reaktor zwischen 60°C und 150°C beträgt.

10. Verfahren gemäß Anspruch 8, **dadurch gekennzeichnet, dass** der Reaktor ein Statikmischer ist.

11. Verfahren gemäß Anspruch 10, **dadurch gekennzeichnet, dass** der Statikmischer ein Längen/Durchmesser-Verhältnis im Bereich von 8:1 bis 16:1 aufweist.

12. Verfahren zur kontinuierlichen Herstellung von thermoplastischen Polyurethanen gemäß einem oder mehreren der Ansprüche 1 bis 4, **dadurch gekennzeichnet, dass** das Polyol/Polyolgemisch und der Kettenverlängerer kontinuierlich gemischt werden, danach mit dem Hexamethylendiisocyanat zur Reaktion gebracht wird, danach mit dem anderen (zweiten) aliphatischen Diisocyanat abgemischt und zur Reaktion gebracht wird, die Reaktion in einem Austragsgefäß zu Ende geführt wird und das Produkt gegebenenfalls granuliert wird.

13. Verfahren zur kontinuierlichen Herstellung von thermoplastischen Polyurethanen gemäß einem oder mehreren der Ansprüche 1 bis 4, **dadurch gekennzeichnet, dass** das Polyol/Polyolgemisch und der Kettenverlängerer kontinuierlich gemischt werden, das Gemisch mit dem anderen aliphatischen Diisocyanat zur Reaktion gebracht wird, danach Hexamethylendiisocyanat zugegeben wird, die Reaktion in einem Austragsgefäß zu Ende gebracht wird und das Produkt gegebenenfalls abschließend granuliert wird.

14. Verfahren zur kontinuierlichen Herstellung von thermoplastischen Polyurethanen gemäß einem oder mehreren der Ansprüche 1 bis 4 nach dem Prepolymerverfahren, **dadurch gekennzeichnet, dass** zunächst das Diisocyanat/-Diisocyanatgemisch mit dem Polyol/Polyolgemisch gemischt und unter Erhalt eines Prepolymeren zur Reaktion gebracht wird und dieses Prepolymer in einem zweiten Schritt mit dem Kettenverlängerer vermischt und zur Reaktion gebracht wird.

15. Verwendung der thermoplastischen Polyurethane gemäß einem der Ansprüche 1 bis 4 bzw. der nach den Verfahren gemäß den Ansprüchen 5 bis 14 hergestellten thermoplastischen Polyurethane zur Herstellung von Formkörpern.

16. Verwendung gemäß Anspruch 15 zur Herstellung von Extrudaten und Spritzgießteilen.

17. Verwendung der thermoplastischen Polyurethane gemäß einem der Ansprüche 1 bis 4 bzw, der nach den Verfahren gemäß den Ansprüchen 5 bis 14 hergestellten thermoplastischen Polyurethane als sinterfähiges Pulver zur Herstellung von Flächengebilden und Hohlkörpern.

18. Formkörper erhältlich aus einem thermoplastischen Polyurethan gemäß einem oder mehreren der Ansprüche 1 bis 4 oder aus einem nach den Verfahren gemäß den Ansprüchen 5 bis 14 hergestellten thermoplastischen Polyurethan.

**Claims**

1. Thermoplastic polyurethanes having a yellowness index of < 20, preferably < 15, after 504 hours of weathering in accordance with ISO 4892 and having a softening point (measured by dynamic mechanical analysis (DMA) in tensile mode) $T_s$ (at E' = 3 MPa) > 100°C for thermoplastic polyurethanes having a hardness of 75 to 84 Shore A and having a softening point (measured by dynamic mechanical analysis (DMA) in tensile mode) $T_s$ (at E' = 3 MPa) > 130°C for thermoplastic polyurethanes having a hardness of 85 to 98 Shore A and after 504 hours of weathering in accordance with ISO 4892, wherein the thermoplastic polyurethanes consist of the following reaction products:

   A) 100 to 60 mol% of hexamethylene diisocyanate (HDI) and 0 to 40 mol% of other aliphatic diisocyanates,
   B) polyols from the group consisting of polyester polyols, polyether polyols, polyether polyol-polyester polyol blends, polyether polyol-polycarbonate diol blends, polyester polyol-polycarbonate diol blends and polycarbonate diols, each having average molecular weights of between 600 and 5000 g/mol,
   C) 80 to 100 wt.% of 1,6-hexanediol and 0 to 20 wt.% of chain extender having an average molecular weight of 60 to 500 g/mol,
   D) as UV stabilisers a mixture of hindered amine stabilisers (HALS) and hydroxyphenyl benzotriazoles in a weight ratio of 2:1 to 1:2 and in an amount of 0.4 to 0.9 wt.% relative to A) and B) and C),
   E) optionally catalysts and
   F) optionally conventional auxiliary agents and additives,

   wherein the equivalents ratio of diisocyanate A) to polyol B) is between 1.5:1.0 and 10.0:1.0 and wherein the NCO value (formed from the quotient of the equivalents ratio of isocyanate groups and the sum of hydroxyl groups from the polyol and chain extender multiplied by 100) is 95 to 105.

2. Thermoplastic polyurethanes according to claim 1, wherein
   95 to 60 mol% of hexamethylene diisocyanate (HDI), preferably 90 to 60 mol% , and 5 to 40 mol% of other aliphatic diisocyanates, preferably 10 to 40 mol%, are used as component A)
   and
   polyester polyol-polycarbonate diol blends having an average molecular weight of between 600 and 5000 g/mol are used as component B).

3. Thermoplastic polyurethanes according to claim 1, wherein
   95 to 60 mol% of hexamethylene diisocyanate (HDI), preferably 90 to 60 mol% , and 5 to 40 mol% of other aliphatic diisocyanates, preferably 10 to 40 mol%, are used as component A)
   and
   polycarbonate diols having an average molecular weight of between 600 and 5000 g/mol are used as component B).

4. Thermoplastic polyurethanes according to claim 1, wherein
   95 to 70 mol% of hexamethylene diisocyanate and 5 to 30 mol% of other aliphatic diisocyanates are used as component A)
   and
   polyester polyol, polyether polyol, a blend of polyether polyol and polyester polyol, a blend of polyether polyol and polycarbonate diol or a blend of polyester polyol and polycarbonate diol, each having an average molecular weight of between 600 and 5000 g/mol, are used as component B).

5. Process for the continuous production of thermoplastic polyurethanes according to one or more of claims 1 to 4, **characterised in that** the polyol / the polyol blend and the chain extender are mixed continuously and then mixed intensively (one-shot method) with the diisocyanate / diisocyanate blend and then the reaction is continued to an end in a discharge vessel (for example an extruder) and the product thus obtained is optionally pelletised.

6. Process according to claim 5, **characterised in that** the reaction is performed in the presence of a catalyst.

7. Process according to claim 5 or 6, **characterised in that** the temperatures of the polyol/(polyol blend)/chain extender mixture and the diisocyanate (diisocyanate blend) differ by no more than 20°C, preferably 10°C.

8. Process according to claim 5 or 6, **characterised in that** the polyol / polyol blend and the chain extender are mixed continuously and then mixed intensively with the diisocyanate / diisocyanate blend in a reactor for a maximum of 5 seconds until homogeneous, the difference in temperature between the two blends before being combined in the reactor being < 20°C.

9. Process according to claim 8, **characterised in that** the temperature of the two blends before being introduced into the reactor is between 60°C and 150°C.

10. Process according to claim 8, **characterised in that** the reactor is a static mixer.

11. Process according to claim 10, **characterised in that** the static mixer has a length-to-diameter ratio in the range from 8:1 to 16:1.

12. Process for the continuous production of thermoplastic polyurethanes according to one or more of claims 1 to 4, **characterised in that** the polyol / polyol blend and the chain extender are mixed continuously, then reacted with the hexamethylene diisocyanate, then mixed with the other (second) aliphatic diisocyanate and reacted, the reaction is continued to an end in a discharge vessel and the product is optionally pelletised.

13. Process for the continuous production of thermoplastic polyurethanes according to one or more of claims 1 to 4, **characterised in that** the polyol / polyol blend and the chain extender are mixed continuously, the mixture is reacted with the other aliphatic diisocyanate, then hexamethylene diisocyanate is added, the reaction is continued to an end in a discharge vessel and the product is then optionally pelletised.

14. Process for the continuous production of thermoplastic polyurethanes according to one or more of claims 1 to 4 by the prepolymer method, **characterised in that** the diisocyanate / diisocyanate blend is first mixed with the polyol / polyol blend and reacted to obtain a prepolymer, and in a second stage this prepolymer is mixed with the chain extender and reacted.

15. Use of the thermoplastic polyurethanes according to one of claims 1 to 4 or the thermoplastic polyurethanes produced by the process according to claims 5 to 14 for the production of moulded articles.

16. Use according to claim 15 for the production of extrudates and injection moulded parts.

17. Use of the thermoplastic polyurethanes according to one of claims 1 to 4 or the thermoplastic polyurethanes produced by the process according to claims 5 to 14 as a sinterable powder for the production of flat materials and hollow articles.

18. Moulded articles obtainable from a thermoplastic polyurethane according to one or more of claims 1 to 4 or from a thermoplastic polyurethane produced by the process according to claims 5 to 14.

**Revendications**

1. Polyuréthanes thermoplastiques avec un indice de jaunissement < 20, de préférence < 15 après 504 heures d'exposition aux intempéries selon ISO 4892 et avec une température de ramollissement (mesurée au moyen de l'analyse dynamique-mécanique (DMS) dans un mode de traction) $T_{ram}$ (pour E' = 3 MPa) > 100°C pour des polyuréthanes thermoplastiques avec une dureté de 75 à 84 Shore A et une température de ramollissement (mesurée au moyen de l'analyse dynamique-mécanique (DMS) dans un mode de traction) $T_{ram}$ (pour E' = 3 MPa) > 130°C pour des polyuréthanes thermoplastiques avec une dureté de 85 à 98 Shore A avant et après 504 heures d'exposition aux intempéries selon ISO 4892, les polyuréthanes thermoplastiques étant constitués des produits de réaction suivants

A) de 100 à 60 % en mole de diisocyanate d'hexaméthylène (HDI) et de 0 à 40 % en mole d'autres diisocyanates aliphatiques,
B) de polyols du groupe constitué de polyesterpolyols, de polyétherpolyols, de mélanges de polyétherpolyols/polyesterpolyols, de mélanges de polyétherpolyols/polycarbonatediols, de mélanges de polyesterpolyols/polycarbonatediols et de polycarbonatediols avec à chaque fois des poids moléculaires moyens de 600 à 5 000 g/mole,

C) de 80 à 100 % en poids de 1,6-hexanediol et de 0 à 20 % en poids d'agent d'allongement de chaîne avec un poids moléculaire moyen de 60 à 500 g/mol,

D) comme stabilisateurs aux UV, d'un mélange de stabilisateurs d'amines encombrées (HALS) et d'hydroxybenzylbenzotriazoles dans un rapport massique de 2 : 1 à 1 : 2 et dans une quantité de 0,4 à 0,9 % en poids rapportée à A) et B) et C),

E) éventuellement de catalyseurs et

F) éventuellement d'auxiliaires et d'additifs classiques,

le rapport d'équivalents du diisocyanate A) au polyol B) étant compris entre 1,5 : 1,0 et 10,0 : 1,0 et l'indice NCO (formé à partir du quotient multiplié par 100 des rapports d'équivalents des groupes isocyanates et de la somme des groupes hydroxyles du polyol et de l'agent d'allongement de chaîne) est de 95 à 105.

2. Polyuréthanes thermoplastiques selon la revendication 1, dans lequel on utilise comme constituant A) de 95 à 60 % en mole de diisocyanate d'hexaméthylène (HDI), de préférence de 90 à 60 % en mole et de 5 à 40 % en mole d'autres diisocyanates aliphatiques, de préférence de 10 à 40 % en mole,
et comme constituant B) des mélanges de polyesterpolyol/polycarbonatediol avec un poids moléculaire moyen de 600 à 5 000 g/mole.

3. Polyuréthanes thermoplastiques selon la revendication 1, dans lequel on utilise comme constituant A) de 95 à 60 % en mole de diisocyanate d'hexaméthylène (HDI), de préférence de 90 à 60 % en mole et de 5 à 40 % en mole d'autres diisocyanates aliphatiques, de préférence de 10 à 40 % en mole,
et comme constituant B) des polycarbonatediols avec un poids moléculaire moyen de 600 à 5 000 g/mole.

4. Polyuréthanes thermoplastiques selon la revendication 1, dans lesquels on utilise comme constituant A) de 95 à 70 % en mole de diisocyanate d'hexaméthylène et de 5 à 30 % en mole d'autres diisocyanates aliphatiques,
et comme constituant B) un polyesterpolyol, un polyétherpolyol, un mélange de polyétherpolyol et de polyesterpolyol, un mélange de polyétherpolyol et de polycarbonatediol ou un mélange de polyesterpolyol et de polycarbonatediol avec à chaque fois un poids moléculaire moyen de 600 à 5 000 g/mole.

5. Procédé pour la préparation continue de polyuréthanes thermoplastiques selon l'une ou plusieurs des revendications 1 à 4, **caractérisé en ce que** l'on mélange en continu le polyol/le mélange de polyols et l'agent d'allongement de chaîne et on mélange après cela intensivement avec le diisocyanate/mélange de diisocyanates (procédé One-Shot) et on amène ensuite la réaction à l'achèvement dans une cuve d'évacuation (par exemple dans une extrudeuse) et on granule éventuellement le produit ainsi obtenu.

6. Procédé selon la revendication 5, **caractérisé en ce que** l'on réalise la réaction en présence d'un catalyseur.

7. Procédé selon la revendication 5 ou 6, **caractérisé en ce que** les températures du mélange de polyol/(mélange de polyols)/agents d'allongement de chaîne et du diisocyanate (mélange de diisocyanates) ne se différencient pas de plus de 20°C, de préférence de 10°C.

8. Procédé selon la revendication 5 ou 6, **caractérisé en ce que** l'on mélange en continu le polyol/mélange de polyols et l'agent d'allongement de chaîne on mélange après cela intensivement avec le diisocyanate/mélange de diisocyanates dans un réacteur en l'espace au maximum de 5 secondes à l'état homogène, les températures des deux mélanges avant l'introduction simultanée dans le réacteur présentant une différence < 20°C.

9. Procédé selon la revendication 8, **caractérisé en ce que** la température des deux mélanges est avant l'entrée dans le réacteur de 60°C à 150°C.

10. Procédé selon la revendication 8, **caractérisé en ce que** le réacteur est un mélangeur statique.

11. Procédé selon la revendication 10, **caractérisé en ce que** le mélangeur statique présente un rapport longueur/diamètre dans le domaine de 8 : 1 à 16 : 1.

12. Procédé pour la préparation continue de polyuréthanes thermoplastiques selon l'une ou plusieurs des revendications 1 à 4, **caractérisé en ce que** l'on mélange en continu le polyol/mélange de polyols et l'agent d'allongement de chaîne on fait après cela réagir avec le diisocyanate d'hexaméthylène, on mélange après cela avec l'autre (second) diisocyanate aliphatique et on fait réagir, on amène la réaction à l'achèvement dans une cuve d'évacuation et on granule éventuellement le produit.

13. Procédé pour la préparation continue de polyuréthanes thermoplastiques selon l'une ou plusieurs des revendications 1 à 4, **caractérisé en ce que** l'on mélange en continu le polyol/mélange de polyols et l'agent d'allongement de chaîne, on fait réagir le mélange avec l'autre diisocyanate aliphatique, on ajoute après cela le diisocyanate d'hexaméthylène, on amène la réaction à l'achèvement dans une cuve d'évacuation et on granule éventuellement ensuite le produit.

14. Procédé pour la préparation continue de polyuréthanes thermoplastiques selon l'une ou plusieurs des revendications 1 à 4 selon le procédé prépolymère, **caractérisé en ce que** l'on mélange dans un premier temps le diisocyanate/mélange de diisocyanates avec le polyol/mélange de polyols et on fait réagir en obtenant un prépolymère et on mélange ce prépolymère dans une seconde étape avec l'agent d'allongement de chaîne et on fait réagir.

15. Utilisation des polyuréthanes thermoplastiques selon l'une quelconque des revendications 1 à 4 respectivement des polyuréthanes thermoplastiques préparés selon le procédé selon les revendications 5 à 14 pour la préparation de corps moulés.

16. Utilisation selon la revendication 15 pour la préparation d'extrudés et de pièces moulées par injection.

17. Utilisation des polyuréthanes thermoplastiques selon l'une quelconque des revendications 1 à 4 respectivement des polyuréthanes thermoplastiques préparés selon le procédé selon les revendications 5 à 14 comme poudre apte au frittage pour la préparation de produits plans et de corps creux.

18. Corps moulé obtenu à partir d'un polyuréthane thermoplastique selon l'une ou plusieurs des revendications 1 à 4 ou à partir d'un polyuréthane thermoplastique préparé selon le procédé selon les revendications 5 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5541277A A
- JP 10110025 A
- DE 4203307 C
- US 5824738 A
- DE 2328795 C
- DE 2901774 A

**In der Beschreibung aufgeführte Nicht-Patentliteratur**

- *Chem.-Ing. Techn.,* vol. 52 (4), 285-291
- Mischen von Kunststoff und Kautschukprodukten. VDI-Verlag, 1993
- High Polymers. **J.H. Saunders ; K.C. Frisch.** Polyurethane. Interscience Publishers, 1962, vol. XVI
- Taschenbuch der Kunststoff-Additive. Hanser Verlag, 1989